# EUROPEAN PATENT APPLICATION

(11) **EP 1 879 328 A1**
(43) Date of publication of application: **16.01.2008**
(21) Application number: 06741728.7
(22) Date of filing: 26.04.2006
(51) Int. Cl.: H04L 12/28

(54) **A METHOD FOR MANAGING A HOME NETWORK AND A HOME NETWORK MANAGEMENT SYSTEM**

(30) Priority: 30.04.2005 CN 200510070516
(71) Applicant: Huawei Technologies Co., Ltd., Longgang District Shenzhen Guangdong 518129 (CN)
(72) Inventor: YANG, Bo, Huawei Administration Building, 518129 Shenzhen Guangdong (CN); WANG, Lin, Huawei Administration Building, 518129 Shenzhen Guangdong (CN); WANG, Zhaoyang, Huawei Administration Building, 518129 Shenzhen Guangdong (CN); ZHANG, Zhiyong, Huawei Administration Building, 518129 Shenzhen Guangdong (CN); LI, Lei, Huawei Administration Building, 518129 Shenzhen Guangdong (CN)
(74) Representative: Körber, Martin Hans
(86) International application number: PCT/CN2006/000801
(87) International publication number: WO 2006/116916

(57) **Abstract**

The present invention discloses a method and a system for managing a home network. The control unit of a home network management system receives the service information between an external network and a home network device and transmits the service information to the log unit which then records the service information; and the control unit or the administrator manages the home network, for example updates the recording criteria and/or the filter criteria according to the service information stored in the log unit. The present invention can obtain the utilization frequency and status of a home network service, and determine whether the inappropriate information is communicated between a home network device and an external network, so that an administrator or the home network management system can take related management measure and thereby effectively manage the home network.

## Description

### Field of the Invention

The present invention relates to a network communication technology, and more particularly to a method and a system for managing a home network.

### Background of the Invention

As communication technologies develop, more and more services are carried over a home network. For example, operators provide services such as Internet Protocol (IP) phone and multimedia services for home users by means of devices such as an Access Media Gateway (AMG), an Integrated Access Device (IAD) and an Ethernet Phone (Ephone), as well as IP bearer networks; or operators provide home users with services such as a television program, a movie program, a video on demand etc. through IP set-top boxes and IP bearer networks; or operators provide data services for home users by utilizing access technologies such as dial-up access, Asymmetrical Digital Subscriber Line (ADSL), Ethernet Access, cable access, etc.

When a home user accesses the Internet through a home network, the related services typically include web browsing, e-mail, instant communication (e.g., through QQ / MSN etc.), music, movie downloading, etc.

The home network services bring happiness to people, but inappropriate information on the network may also bring inappropriate influence to people. For example, parents usually hope that their home network can be managed by some management technologies. The inappropriate information on the network making against the healthy growth of teenagers may be filtered by means of these management technologies.

At present, in order to manage a home network and prevent inappropriate information on the Internet from being transmitted to the home network, a method of filtering network information is adopted in the prior art, including: setting up some matching criteria in advance, and prohibiting a home user from accessing particular external resources according to the matching criteria, or prohibiting an external user from accessing the particular resources of the home user. For example, varieties of firewalls or home filter software can be installed in home computers, or some filter software are installed in access devices such as ADSL modems or home gateways; or some filter software are installed in the networks over which operators access servers. The matching criteria preset in the filter software are capable of preventing home users from accessing specified external resources or preventing external users from accessing the specified resources of home users.

In the prior art, the effect of home network management totally depends on the effect of filtering, while the effect of filtering totally depends on the comprehensiveness and the intelligence of the preset matching criteria. However, the filter criteria in the prior art are not capable of implementing comprehensiveness and intelligence, i.e., the actual contents of voice, video and data service streams cannot be recognized. Therefore, the filter software cannot effectively restrict the use of EPhone for listening to inappropriate voice information or the use of voice chats or video chats of QQ/MSN for taking inappropriate information, or can not prevent teenagers from watching restricted movie or television programs through IP set-top boxes.

It can be seen from the above that managing home network by just filtering the service information in the prior art is quite limited and, consequently, effective management of the home networks is not achieved.

### Summary of the Invention

The present invention provide a method for managing a home network, and provide a home network management system for effective management of a home network.

The technical scheme of the present invention is given as follows.

A system for managing a home network includes: a control unit and a log unit; and
the control unit is capable of receiving service information transmitted between the transmitter and the receiver in an external network and a home network device, and transmitting the service information to the log unit and to the receiver; and
the log unit is capable of receiving the service information transmitted from the control unit, and storing the service information.
The system further includes:
a service unit capable of receiving the service information transmitted from the control unit, and outputting the service information to an administrator, and
the control unit is further capable of obtaining the service information stored in the log unit and transmitting the service information to the service unit.

The service unit is further capable of receiving a log processing instruction inputted by an administrator and transmitting the log processing instruction to the control unit; the log processing instruction includes: an instruction indicating at least one operation selected from the group consisting of: querying for a log, modifying the log and deleting the log; and
the control unit is further capable of performing, upon receiving the log processing instruction, the at least one operation on the service information stored in the log unit according to the log processing instruction; the at least one operation is selected from the group consisting of: querying for a log, modifying the log and deleting the log.

The control unit is further capable of encrypting the received service information, transmitting the service information encrypted to the log unit, and decrypting the service information obtained from the log unit and transmitting the service information decrypted to the service unit; and
the log unit is capable of storing the service information encrypted received from the control unit.

The control unit is further capable of storing recording criteria, determining whether it is necessary to record the service information according to the recording criteria stored in the control unit upon receiving the service information, and transmitting the service information to the log unit if it is necessary to record the service information.

The system further includes:
a service unit capable of receiving a recording criteria processing instruction inputted by an administrator and transmitting the recording criteria processing instruction to the control unit, and:
   the recording criteria processing instruction includes an instruction indicating at least one operation selected from the group consisting of: querying for the recording criteria, modifying the recording criteria, deleting the recording criteria and restoring default values; and
   the control unit is further capable of receiving the recording criteria processing instruction transmitted from the service unit and performing the at least one operation on the recording criteria stored in the control unit according to the recording criteria processing instruction; the at least one operation is selected from the group consisting of: querying for the recording criteria, modifying the recording criteria, deleting the recording criteria and restoring default values.

The control unit is further capable of storing filter criteria, filtering the service information according to the filter criteria stored in the control unit upon receiving the service information, and transmitting the service information filtered to the receiver.

The system further includes:
a service unit capable of receiving a filter criteria processing instruction inputted by an administrator and transmitting the filter criteria processing instruction to the control unit, and:
   the filter criteria processing instruction includes an instruction indicating at least one operation selected from the group consisting of: querying for the filter criteria, modifying the filter criteria, deleting the filter criteria and restoring default values; and
   the control unit is further capable of receiving the filter criteria processing instruction, and performing the at least one operation on the filter criteria stored in the control unit according to the filter criteria processing instruction; the at least one operation is selected from the group consisting of: querying for the filter criteria, modifying the filter criteria, deleting the filter criteria and restoring default values.

The control unit is further capable of updating the recording criteria according to the service information stored in the log unit.

The control unit is further capable of storing management authority information upon receiving the instruction, transmitting an authority verification request to the service unit, determining, upon receiving the management authority information transmitted from the service unit, whether the management authority information received is identical with the management authority information stored in the control unit, and performing the at least one operation if the management authority information received is identical with the management authority information stored; and
the service unit is further capable of indicating that the management authority information needs to be inputted by the administrator upon receiving the authority verification request, and transmitting, upon receiving the management authority information inputted by the administrator, the management authority information to the control unit.

The control unit is further used for saving an access password, determining, upon receipt of the access password transmitted from the service unit, whether the received access password is identical with the saved access password and, if the received access password is identical with the saved access password, performing the at least one operation required by the instruction; and
the service unit is further used for indicating that the access password needs to be inputted by the administrator upon receiving the authority verification request, and transmitting, upon receiving the access password input by the administrator, the access password to the control unit.

A method for managing a home network includes:
recording service information transmitted between an external network and a home network device; and
managing the home network according to the service information.

The service information includes service contents and relevant information corresponding to a service; and the relevant information corresponding to the service includes at least one piece of information selected from a group consisting of: a time when accessing the service and the duration of accessing the service.

The method further includes: setting a log unit and a control unit, and:
the recording the service information between the external network and the home network device includes:
   A. receiving, by the control unit, the service information between the external network and the home network device; and
   B. transmitting, by the control unit, the service information received to the log unit which then stores the service information.

The method, between step A and step B, further includes:
determining, by the control unit, whether it is necessary to record the service information according to the recording criteria preset in the control unit in advance;
if yes, proceed with step B.

The managing the home network according to the service information includes:
updating, by the control unit, at least one set of criteria selected from the group consisting of: recording criteria and filter criteria stored in the control unit according to the service information stored in the log unit.

The method further includes:
setting a service unit, and:
   the managing the home network according to the service information includes:
      receiving, by the service unit, at least one set of criteria selected from the group consisting of: recording criteria and filter criteria inputted by the administrator; and
      transmitting, by the service unit, the at least one set of criteria to the control unit; and;
      updating, by the control unit, at least one set of criteria selected from the group consisting of: recording criteria and filter criteria stored in the control unit according to the at least one set of criteria transmitted from the service unit.

It can be seen from the above that the present invention can record the service information between the home network and the external network and obtain the utilization frequency and status of home network services, and therefore determining whether inappropriate information is exchanged between the home network device and the external network so that the administrator may correct and guide the people who uses the inappropriate information. Furthermore, the administrator or the home network management system can take corresponding management measures such as modifying recording criteria and filter criteria, and controlling the interaction between the home network device and the external network according to the modified recording criteria and filter criteria for more effective management of the home network.

### Brief Description of the Drawings

Figure 1 is a schematic diagram of the basic structure of a system in accordance with the present invention.
Figure 2 is a schematic diagram of the optimized structure of a system in accordance with the present invention.
Figure 3 is a flow chart of an embodiment of the present invention.

### Embodiments of the Invention

In the prior art, comprehensiveness and intelligence can not be implemented by means of the matching criteria set for filtering, and the actual contents of voice, video and data service streams cannot be recognized. It is necessary for the home network administrator such as parents to learn service information such as the utilization frequency and status of a home network in time for effective management of the home network. The present invention provides a method for managing a home network, including: recording service information exchanged between an external network and a home network device; and managing the home network according to the recorded service information.

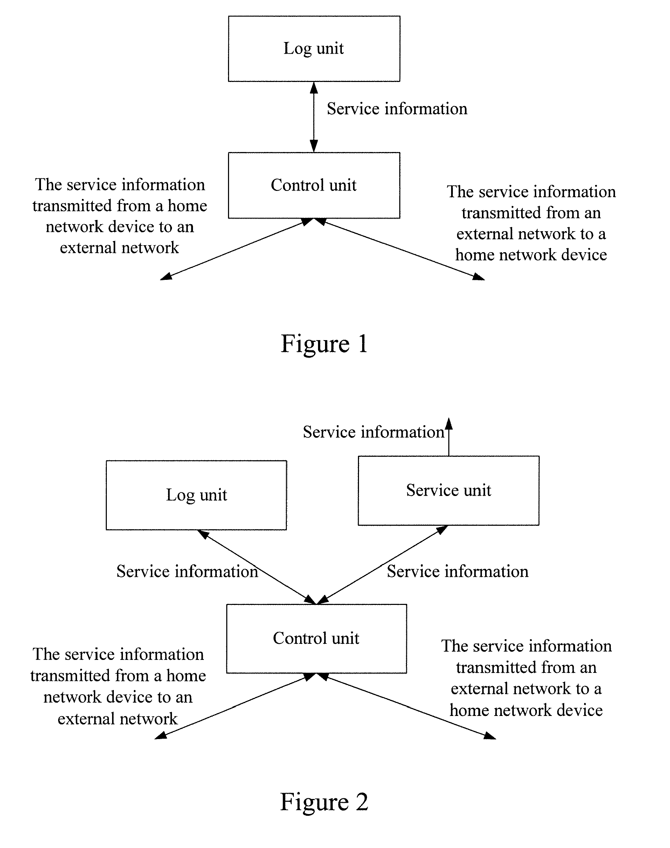

Accordingly, the present invention also provides a home network management system. Figure 1 is a schematic diagram of the basic structure of the system in accordance with the present invention. As shown in Figure 1, the system basically includes a log unit and a control unit in accordance with the present invention.

The control unit is capable of receiving service information transmitted from a transmitter to a receiver in the external network and the home network device, and transmitting the service information to the log unit and to the receiver.

The log unit is capable of storing the received service information.

Figure 2 is a schematic diagram of the optimized structure of the system in accordance with the present invention. As shown in Figure 2, for an administrator to learn whether the service information between the home network device and the external network includes inappropriate information, the system further includes a service unit.

The control unit is further capable of obtaining the stored service information from the log unit and transmitting the obtained service information to the service unit.

The service unit is capable of providing the service information for the administrator upon receiving the service information transmitted from the control unit.

In the system of the present invention, the control unit is further capable of storing recording criteria, and determining whether it is necessary to record the current service information according to the stored recording criteria upon receiving the service information, and if it is necessary to record the current service information, transmitting the service information to the log unit.

Moreover, the control unit is further capable of storing filter criteria, and filtering the service information according to the stored filter criteria upon receiving the service information transmitted from the transmitter in the external network and the home network device, and transmitting the filtered service information to the receiver in the external network and the home network device.

The units in the system in accordance with the present invention, including the control unit, the log unit as well as the service unit, may be located in the same physical entity, or may be located in different physical entities.

As located in the same physical entity, the control unit, the log unit as well as the service unit may be located in a newly added physical entity in accordance with the present invention; or may be located in any device in the home network.

As located in the different physical entities, the control unit, the log unit as well as the service unit may respectively be located in various newly added physical entities, various home network devices, various external devices of the home network, or any combination of the above. For example, the log unit and the service unit are located in a home network device, and the control unit is located in a newly added physical entity; or the log unit is located in a gateway device, the control unit is located in a newly added physical entity, and the service unit is located in a home network device. The above mentioned are just implementation manners of system in accordance with embodiments of the present invention, and other implementation manners of system may be included in the present invention.

It is noted that the control unit, the log unit as well as the service unit are all logical function units in the system of the present invention, and any one of the function units in the system of the present invention may also be located in the different physical entities in the implementation of services in accordance with the present invention. For example, the control unit is located in both a home device and a newly added physical entity in accordance with the present invention.

The present invention is hereinafter further described in detail with reference to accompanying drawings as well as embodiments so as to make the technical solution and merits thereof more apparent.

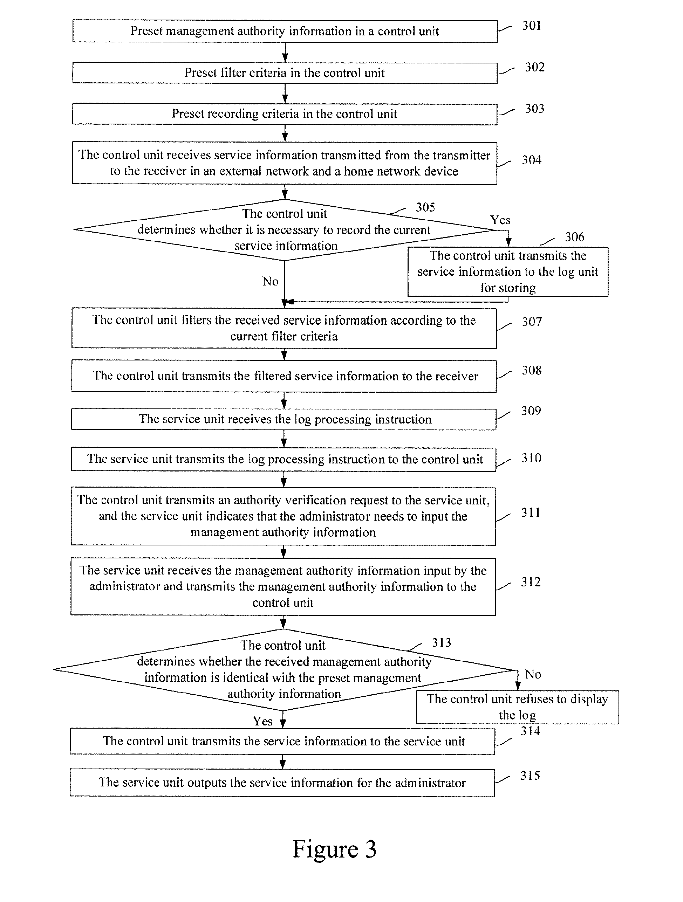

Figure 3 is a flow chart of an embodiment in accordance with the present invention. As shown in Figures 1, 2 and 3, a method for obtaining the service information of the home network using the system of the present invention includes the following processes in accordance with the present invention.

Block 301: Preset management authority information in a control unit.

The management authority information may be any information identifying the identity of an administrator, such as an access password, etc.

Block 302: Preset filter criteria in the control unit.

The filter criteria may be configured to filter service information from a particular original IP address and/or a port number and/or a call number and/or a channel number etc.

Block 303: Preset recording criteria in the control unit.

The recording criteria may be set in accordance with varieties of policies. For example, the recording criteria may include: recording the service information from a particular original IP address and/or a port number and/or a calling number and/or a channel number etc.

Block 304: The control unit of the home network management system receives the service information transmitted from the transmitter to the receiver in the external network and the home network device.

Block 305: The control unit determines whether it is necessary to record the current service information according to the preset recording criteria; and if it is necessary to record the service information, continue with Block 306; otherwise, continue with Block 307.

For example, when the preset recording criteria are to record the service information from a particular original IP address and a port number, the process of determining includes: obtaining the original IP address and the port number of the current service information by the control unit, and determining whether the original IP address and the port number obtained currently can be found in the original IP address and the port number from which the service information should be recorded, and if yes, recording the current service information; otherwise not recording the current service information.

Block 306: The control unit transmits the received service information to the log unit, and the log unit stores the received service information.

The service information includes not only the service contents exchanged in the current service, but also relevant information corresponding to the current service, such as the time when accessing the service and the duration of accessing the service.

In Block 306, the control unit further encrypts the received service information upon receiving the service information and transmits the encrypted service information to the log unit, and the log unit stores the encrypted service information received from the control unit.

Block 307: The control unit filters the received service information according to the preset filter criteria.

Block 308: The control unit transmits the filtered service information to the receiver in the external network and the home network device.

Therefore, the service information to be recorded is stored by the log unit. If the administrator, e.g., a parent, needs to inspect the service information between the home network and the external network recorded in the log unit, the parent may inspect the service information through the following processes.

Block 309: The administrator inputs a log processing instruction, and the service unit of a home network management system receives the log processing instruction.

The log processing instruction includes an instruction indicating any one or any combination of the following operations: querying for the log, modifying the log and deleting the log. The implementation of the subsequent process of the present embodiment can be described by taking the operation of querying for the log as an example.

Block 310: The service unit transmits the received log processing instruction to the control unit.

Block 311: The control unit transmits an authority verification request to the service unit, and the service unit indicates that the administrator needs to input management authority information.

Block 312: The service unit receives the management authority information inputted by the administrator, and transmits the management authority information to the control unit.

Block 313: The control unit determines whether the current received management authority information is identical with the preset management authority information, and if the current received management authority information is identical with the preset management authority information, continue with Block 314; otherwise, refuse to display the log and terminate the current procedure.

Block 314: The control unit obtains the stored service information from the log unit and transmits the obtained service information to the service unit.

When the control unit transmits the encrypted service information to the log unit upon encrypting the service information in Block 305, the log unit stores the encrypted service information and the control unit obtains the encrypted service information from the log unit in Block 305. Accordingly, the control unit decrypts the encrypted service information and transmits the decrypted service information to the service unit.

Block 315: The service unit outputs the received service information to the administrator.

If the service information includes video information, the video information will be displayed to the administrator, while if the service information includes audio information, the audio information will be played to the administrator.

In the process shown in Figure 3, when the log processing instruction includes any one or the combination of modifying operation and deleting operation, the control unit, upon receiving the log processing instruction and having determined that the received management authority information is identical with the stored management authority information, interacts with the log unit to modify and/or delete the service information stored in the log unit and transmits the result of the modifying and/or deleting process to the service unit. The service unit further provides the result of the modifying and/or deleting process for the administrator. This process is similar to the process from Block 309 to Block 315.

In the present invention, in addition to the operations of querying for the log, modifying the log and deleting the log, which are performed according to the log processing instruction, the service unit may also receive a recording criteria processing instruction or a filter criteria processing instruction inputted by the administrator. The recording criteria processing instruction or the filter criteria processing instruction indicates any one or any combination of the following operations: querying for the recording criteria or filter criteria, modifying the recording criteria or filter criteria, deleting the recording criteria or filter criteria and restoring default values. The service unit transmits the recording criteria processing instruction or the filter criteria processing instruction to the control unit, and the control unit performs, according to the received recording criteria processing instruction or the filter criteria processing instruction, any one or any combination of the following operations: querying for the stored recording criteria or filter criteria, modifying the stored recording criteria or filter criteria, deleting the stored recording criteria or filter criteria, and restoring the default values. The control unit transmits the processing result to the service unit, and the service unit provides the processing result for the administrator. In addition, the control unit may first transmit the authority verification request to the service unit upon receiving the recording criteria processing instruction or the filter criteria processing instruction. The service unit prompts the administrator to input the management authority information, and transmits the received management authority information input by the administrator to the control unit. The control unit determines whether the received management authority information is identical with the preset management authority information; if the received management authority information is identical with the preset management authority information, the control unit continues with the process of performing operation(s) according to the received recording criteria processing instruction or the filter criteria processing instruction, i.e., performing any one or any combination of the following operations: querying for the stored recording or filter criteria, modifying the stored recording criteria or filter criteria, deleting the stored recording criteria or filter criteria and restoring the default values.

In the present invention, the administrator can manage the home network according to the service information recorded in the log unit. For example, if the administrator such as a parent finds that the service information recorded in the log unit includes a webpage containing inappropriate information, the parent may correct and guide the teenager which accesses the inappropriate information, and updates the filter criteria and the recording criteria in the control unit according to the address of the webpage, e.g., updates the filter criteria to filter all service information from the address of the webpage. If the administrator such as a parent finds that the service information recorded in the log unit contains inappropriate voice information and learns the called number of the inappropriate voice information, the parent may correct and guide the teenager who uses the inappropriate voice information, and updates the filter criteria in the control unit according to the called number of the inappropriate voice information, e.g., sets the filter criteria to filter all service information transmitted from the called number.

In the present invention, the control unit can automatically perform the process of managing the home network according to the service information recorded in the log unit. For example, it can be preset in the control unit that the duration of the access to the address of a webpage can not exceed a specified value during a specified time period. The control unit determines, according to the service information recorded in the log unit, whether the duration of the access of the home network device to the address of a webpage exceeds the specified value during the specified time period, and if yes, the address of the webpage is set as a filtered object in the filter criteria. Thus, in the subsequent process, the service information will be filtered when the control unit receives the service information transmitted from or to the address of the webpage. Therefore, effectively management of the home network is achieved.

In the present invention, the communications between various function units, such as the communication between a control unit and a function unit of a home device for receiving service information, the communication between the control unit and the log unit, and the communication between the control unit and the service unit, may be implemented in a wireline or wireless communication manner. When the wireless communication manner is adopted, the communication can be achieved by using various wireless technologies such as Wireless Local Area Network (WLAN), bluetooth, Ultra-Wideband (UWB), short distance wireless communication technology (e.g. ZigBee), Universal Serial Bus (USB), IEEE1394, Home Phone Line Networking Aliance (HomePNA), Power line communication (PLC), Home Cable Networking Aliance (HomeCNA), etc.

In the present invention, a Center Office (CO) device of an external network, a home network device and a home network management system are all able to turn on or shut down the function of a system in accordance with the present invention. For example, the CO device of the external network may, by means of remote access, turn on or shut down the control unit of the system in accordance with the present invention to perform the corresponding control functions.

The foregoing description is only a preferred embodiment of the present invention and is not intended to limit the protection scope thereof. Any modification, equivalent replacement and improvement made under the spirit and principle of the present invention should be included in the protection scope thereof.

## Claims

1. A system for managing a home network, comprising: a control unit and a log unit; wherein:
the control unit is capable of receiving service information transmitted between the transmitter and the receiver in an external network and a home network device, and transmitting the service information to the log unit and to the receiver; and
the log unit is capable of receiving the service information transmitted from the control unit, and storing the service information.

2. The system of Claim 1, further comprising:
a service unit capable of receiving the service information transmitted from the control unit, and outputting the service information to an administrator, wherein
the control unit is further capable of obtaining the service information stored in the log unit and transmitting the service information to the service unit.

3. The system of Claim 2, wherein the service unit is further capable of receiving a log processing instruction inputted by an administrator and transmitting the log processing instruction to the control unit; the log processing instruction comprises: an instruction indicating at least one operation selected from the group consisting of: querying for a log, modifying the log and deleting the log; and
the control unit is further capable of performing, upon receiving the log processing instruction, the at least one operation on the service information stored in the log unit according to the log processing instruction; the at least one operation is selected from the group consisting of: querying for a log, modifying the log and deleting the log.

4. The system of Claim 2, wherein the control unit is further capable of encrypting the received service information, transmitting the service information encrypted to the log unit, and decrypting the service information obtained from the log unit and transmitting the service information decrypted to the service unit; and
the log unit is capable of storing the service information encrypted received from the control unit.

5. The system of Claim 1, wherein the control unit is further capable of storing recording criteria, determining whether it is necessary to record the service information according to the recording criteria stored in the control unit upon receiving the service information, and transmitting the service information to the log unit if it is necessary to record the service information.

6. The system of Claim 5, further comprising:
a service unit capable of receiving a recording criteria processing instruction inputted by an administrator and transmitting the recording criteria processing instruction to the control unit, wherein:
the recording criteria processing instruction comprises an instruction indicating at least one operation selected from the group consisting of: querying for the recording criteria, modifying the recording criteria, deleting the recording criteria and restoring default values; and
the control unit is further capable of receiving the recording criteria processing instruction transmitted from the service unit and performing the at least one operation on the recording criteria stored in the control unit according to the recording criteria processing instruction; the at least one operation is selected from the group consisting of: querying for the recording criteria, modifying the recording criteria, deleting the recording criteria and restoring default values.

7. The system of Claim 1, wherein the control unit is further capable of storing filter criteria, filtering the service information according to the filter criteria stored in the control unit upon receiving the service information, and transmitting the service information filtered to the receiver.

8. The system of Claim 7, further comprising:
a service unit capable of receiving a filter criteria processing instruction inputted by an administrator and transmitting the filter criteria processing instruction to the control unit, wherein:
the filter criteria processing instruction comprises an instruction indicating at least one operation selected from the group consisting of: querying for the filter criteria, modifying the filter criteria, deleting the filter criteria and restoring default values; and
the control unit is further capable of receiving the filter criteria processing instruction, and performing the at least one operation on the filter criteria stored in the control unit according to the filter criteria processing instruction; the at least one operation is selected from the group consisting of: querying for the filter criteria, modifying the filter criteria, deleting the filter criteria and restoring default values.

9. The system of Claim 5 or 7, wherein the control unit is further capable of updating the recording criteria according to the service information stored in the log unit.

10. The system of Claim 3, 6 or 8, wherein the control unit is further capable of storing management authority information upon receiving the instruction, transmitting an authority verification request to the service unit, determining, upon receiving the management authority information transmitted from the service unit, whether the management authority information received is identical with the management authority information stored in the control unit, and performing the at least one operation if the management authority information received is identical with the management authority information stored; and
the service unit is further capable of indicating that the management authority information needs to be inputted by the administrator upon receiving the authority verification request, and transmitting, upon receiving the management authority information inputted by the administrator, the management authority information to the control unit.

11. The system of Claim 10, wherein the control unit is further used for saving an access password, determining, upon receipt of the access password transmitted from the service unit, whether the received access password is identical with the saved access password and, if the received access password is identical with the saved access password, performing the at least one operation required by the instruction; and
the service unit is further used for indicating that the access password needs to be inputted by the administrator upon receiving the authority verification request, and transmitting, upon receiving the access password input by the administrator, the access password to the control unit.

12. A method for managing a home network, comprising:
recording service information transmitted between an external network and a home network device; and
managing the home network according to the service information.

13. The method of Claim 12, wherein the service information comprises service contents and relevant information corresponding to a service; and the relevant information corresponding to the service comprises at least one piece of information selected from a group consisting of: a time when accessing the service and the duration of accessing the service.

14. The method of Claim 12 or 13, further comprising: setting a log unit and a control unit, wherein:
the recording the service information between the external network and the home network device comprises:
A. receiving, by the control unit, the service information between the external network and the home network device; and
B. transmitting, by the control unit, the service information received to the log unit which then stores the service information.

15. The method of Claim 14, between step A and step B, further comprising:
determining, by the control unit, whether it is necessary to record the service information according to the recording criteria preset in the control unit in advance;
if yes, proceed with step B.

16. The method of Claim 14, wherein the managing the home network according to the service information comprises:
updating, by the control unit, at least one set of criteria selected from the group consisting of: recording criteria and filter criteria stored in the control unit according to the service information stored in the log unit.

17. The method of Claim 14, further comprising:
setting a service unit, wherein:
the managing the home network according to the service information comprises:
receiving, by the service unit, at least one set of criteria selected from the group consisting of: recording criteria and filter criteria inputted by the administrator; and
transmitting, by the service unit, the at least one set of criteria to the control unit; and;
updating, by the control unit, at least one set of criteria selected from the group consisting of: recording criteria and filter criteria stored in the control unit according to the at least one set of criteria transmitted from the service unit.
